# EUROPÄISCHE PATENTSCHRIFT

(11) **EP 3 335 959 B1**
(45) Veröffentlichungstag und Bekanntmachung des Hinweises auf die Patenterteilung: **17.07.2019**
(21) Anmeldenummer: 17200137.2
(22) Anmeldetag: 06.11.2017
(51) Int. Cl.: B61B 13/02, B65G 13/00, B65G 35/00

(54) **TRANSPORTMITTEL UND VERFAHREN ZUM TRANSPORTIEREN EINER LAST AUF EINER ROLLENBAHN**
TRANSPORT APPARATUS AND METHOD FOR TRANSPORTING A LOAD ON A ROLLER CONVEYOR
DISPOSITIF DE TRANSPORT ET PROCÉDÉ DE TRANSPORT D'UNE CHARGE SUR UN CHEMIN DE ROULEAUX

(30) Priorität: 16.12.2016 DE 102016124665
(43) Veröffentlichungstag der Anmeldung: 20.06.2018
(73) Patentinhaber: MehrTec GmbH, 53533 Müsch (DE)
(72) Erfinder:
(74) Vertreter: Bauer, Dirk

(56) Entgegenhaltungen:
- DE-C- 43 126
- DE-U1-202006 001 180
- JP-A- H09 272 432

## Beschreibung

Transportmittel und Verfahren zum Transportieren einer Last auf einer Rollenbahn Die Erfindung betrifft zunächst ein Transportmittel zum Transportieren einer Last auf einer Rollenbahn aus einer Mehrzahl von quer zu einer Transportrichtung horizontal angeordneten Tragrollen, mit einer Lastaufnahmeeinrichtung und einem Antrieb sowie mit mindestens einem mittels des Antriebs um eine zu der Rollenbahn parallele Antriebsachse antreibbaren Rad. Die Erfindung betrifft weiterhin ein Verfahren zum Transportieren einer Last auf einer Rollenbahn aus einer Mehrzahl von quer zu einer Transportrichtung horizontal angeordneten Tragrollen mittels eines Transportmittels, das eine Lastaufnahmeeinrichtung und einen Antrieb aufweist, sowie mindestens ein mittels des Antriebs um eine zu der Rollenbahn parallele Antriebsachse antreibbares Rad.

Rollenbahnen sind Stetigförderer ohne Zugmittel für den Stückguttransport aus hintereinander zwischen zwei Stahlprofilen drehbar befestigten Tragrollen. Rollenlängen und Rollenabstand werden nach den Abmessungen des jeweiligen Fördergutes derart gewählt, dass der Achsabstand der Tragrollen weniger als die Hälfte der Stückgutlänge beträgt.

Für Wartungsarbeiten bei einer Fehlfunktion der Rollenbahn - beispielsweise bei einer Blockade durch fehlerhaft geführtes Transportgut - muss häufig das Bedienpersonal auf der Rollenbahn zu dem Ort der Fehlfunktion gelangen und diese manuell beheben. Zu diesem Zweck muss eine Person sich auf der Rollenbahn sicher fortbewegen.

DE 20 2006 001 180 U1 schlägt vor, eine Transporteinrichtung für eine Person auf einer Rollenbahn in einem Durchlaufofen mit einem Raupenantrieb auszustatten, der auf den festgestellten Tragrollen aufliegt. De 20 2006 001 180 U1 offenbart eine Transporteinrichtung nach dem Oberbegriff des Anspruchs 1.

Der Raupentrieb bewirkt auf nicht festgestellten Tragrollen keinen Vortrieb. Die bekannte Transporteinrichtung ist damit für den Einsatz auf Rollenbahnen mit nicht angetriebenen - und damit in der Regel auch nicht feststellbaren - Tragrollen, wie insbesondere Gefälle- oder Schwerkraftrollenbahnen mit einem Gefälle von 2 bis 5 % ungeeignet.

Im Hintergrund der Erfindung offenbaren JP H09-272432 A und DE 43126 A jeweils schienengebundene Transportsysteme mit Zahnradantrieb, der sich an einer zentral zwischen den Schienen verlaufenden, leiterartigen Leiste mit entweder senkrecht oder waagrecht angeordneten Sprossen abstützt.

### Aufgabe

Der Erfindung liegt die Aufgabe zugrunde, ein Transportmittel für eine Rollenbahn mit nicht feststellbaren Tragrollen vorzuschlagen.

### Lösung

Ausgehend von dem bekannten Transportmittel wird nach der Erfindung vorgeschlagen, Stützelemente vorzusehen, die radial zu der Antriebsachse aus dem mindestens einen Rad hervorstehen, in Zwischenräume zwischen den Tragrollen eingreifen und das Transportmittel in der Transportrichtung an den Tragrollen abstützen. Der Antrieb des Rades bewirkt auch auf nicht festgestellten Tragrollen einen Vortrieb des Transportmittels.

Vorzugsweise sind die Stützelemente derart elastisch an dem Transportmittel angebracht, dass sie ausweichen, wenn sie auf eine Tragrolle oder auf ein Hindernis stoßen. Insbesondere können die Stützelemente radial federnd an dem mindestens einen Rad gelagert sein. Alternativ kann das Rad an dem Transportmittel federnd gelagert sein.

Vorzugsweise weist der Antrieb einen Kurbeltrieb auf, der mittels einer Kette mit dem mindestens einen Rad verbunden ist. Der Kurbeltrieb kann einfach von einer mit dem Transportmittel als Last transportierten Person mit Muskelkraft betätigt werden. Die Übertragung mittels einer Kette ermöglicht eine einfache Anpassung an unterschiedliche Anordnungen des Kurbeltriebs beispielsweise für den Handbetrieb oder mit Pedalen. Alternativ kann der Antrieb durch einen Motor, insbesondere durch einen Elektromotor erfolgen, der aus einer auf dem Transportmittel mitgeführten Batterie gespeist wird. Weiterhin alternativ kann der Antrieb mittels eines Kardan- oder Riementriebs oder mittels eines Getriebes mit dem mindestens einen Rad verbunden sein.

Vorzugsweise ist die Antriebsachse um einen Anstellwinkel von 10 bis 20 *Grad* gegen eine Längsrichtung der Tragrollen angestellt. Der Vortrieb erfolgt so gleichmäßiger, weil benachbarte Stützelemente nicht zugleich, sondern zeitlich leicht versetzt in denselben Zwischenraum eingreifen.

Vorzugsweise weist das Transportmittel zwei zu der Transportrichtung spiegelsymmetrische Antriebsachsen mit jeweils mindestens einem der Räder auf. Durch die Spiegelsymmetrie heben sich Anteile des Vortriebs der beiden Achsen quer zu der Transportrichtung auf.

Vorzugsweise weist die Lastaufnahmeinrichtung eine Plattform zur Aufnahme mindestens einer Person auf. Die Plattform erleichtert die Nutzung zum Transport einer Person.

Vorzugsweise befindet sich eine Basisstation für das Transportmittel auf der Rollenbahn, die auf der Rollenbahn gegen Verschieben in der Transportrichtung gesichert ist. Die Basisstation ermöglicht ein gefahrloses Einsteigen einer Person in das Transportmittel. Die Basisstation kann beispielsweise zwischen den Tragrollen oder an den seitlichen Stahlprofilen verspannt werden.

Ausgehend von dem bekannten Verfahren wird nach der Erfindung vorgeschlagen, dass Stützelemente, die zu der Antriebsachse radial aus dem mindestens einen Rad hervorstehen, in Zwischenräume zwischen den Tragrollen eingreifen und das Transportmittel in der Transportrichtung an den Tragrollen abstützen. Das erfindungsgemäße Verfahren wird mit einem erfindungsgemäßen Transportmittel ausgeführt und zeichnet sich gleichermaßen durch die vorstehend genannten Vorteile aus.

Vorzugsweise ist die Last eine Person, die den Antrieb mit Muskelkraft betätigt. Das Transportmittel benötigt so keinen motorischen Antrieb.

Vorzugsweise wird das Transportmittel mittels eines Flurförderzeugs auf die Rollenbahn gesetzt. Im Kontext der Nutzung von Rollenförderern kommen in der Regel auch Flurförderzeuge mit Hebeeinrichtung - insbesondere sog. Hub- oder Gabelstapler - zum Einsatz. Die Positionierung des Transportmittels auf der Rollenbahn mittels eines solchen Flurförderzeugs erfordert daher keine zusätzlichen Betriebsmittel. Zudem kann das Transportmittel auf diese Weise je nach Bedarf an unterschiedlichen Stellen auf die Rollenbahn gesetzt werden.

Vorzugsweise wird das Transportmittel mit einer Basisstation auf die Rollenbahn gesetzt. Basisstation und Transportmittel können so als Einheit gelagert und sogar zusammen mit einer Person mittels des Flurförderzeugs an den jeweiligen Einsatzort transportiert werden.

Vorzugsweise liegt das Transportmittel mit mindestens zwei in der Transportrichtung parallel verlaufenden Kufen auf den Tragrollen auf. Weiter vorzugsweise können solche Kufen mit Laufflächen aus Elastomer oder aus Holz ausgestatten sein. Laufflächen aus Elastomer oder Holz verbessern die seitliche Stabilität des Transportmittels auf metallischen Tragrollen und vermindern das Laufgeräusch des Transportmittels im Betrieb.

### Ausführungsbeispiel

Die Erfindung wird nachfolgend anhand von Ausführungsbeispielen erläutert. Es zeigen
- Fig. 1: ein erstes erfindungsgemäßes Transportmittel und
- Fig. 2a/b: die Antriebsachse des ersten Transportmittels sowie
- Fig. 3: die Antriebsachsen eines zweiten erfindungsgemäßen Transportmittels.

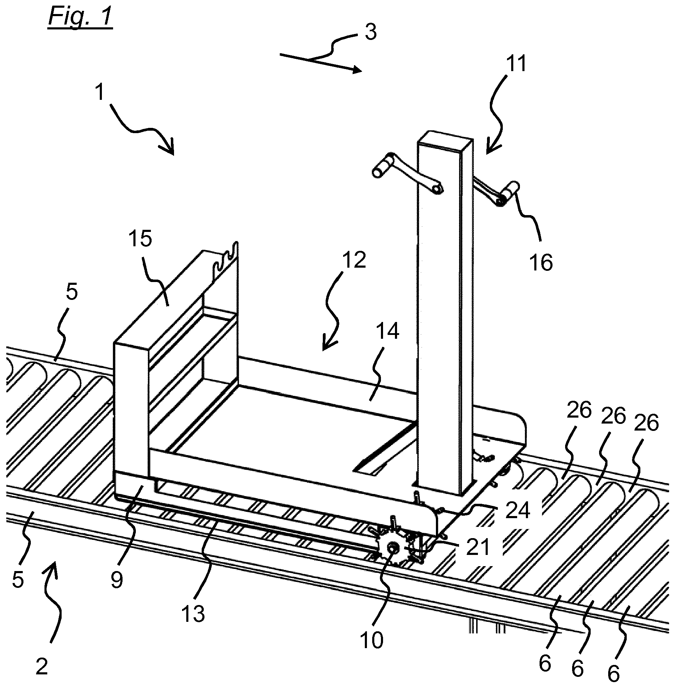

Das in Figur 1 gezeigte erste erfindungsgemäße Transportmittel 1 steht auf einer nur ausschnittsweise dargestellten Rollenbahn 2. Die Rollenbahn 2 besteht im Wesentlichen aus zwei in einer Transportrichtung 3 mit einem Abstand 4 von 810 *mm* parallel verlaufenden Stahlprofilen 5, zwischen denen stählerne Tragrollen 6 mit einem Durchmesser 7 von 80 *mm* mit einem Abstand 8 von jeweils 36 *mm* frei drehbar angebracht sind. Die Rollenbahn 2 weist in verschiedenen Abschnitten ein nicht dargestelltes Gefälle von 2 bis 5 % auf.

Das Transportmittel 1 weist zwei parallel zur Transportrichtung 3 verlaufende Kufen 9 und vorn eine Antriebsachse 10, einen Antrieb 11 und eine Lastaufnahmeeinrichtung 12 auf.

Die Kufen 9 liegen mit Laufflächen 13 aus Elastomer auf den Tragrollen 6 auf. Die Lastaufnahmeeinrichtung 12 weist eine Plattform 14 für eine Person und ein Regal 15 beispielsweise für Werkzeuge oder kleinere Ersatzteile auf. Der Antrieb 11 weist einen Kurbeltrieb 16 auf, mittels dessen das Transportmittel 1 manuell mit Muskelkraft angetrieben wird.

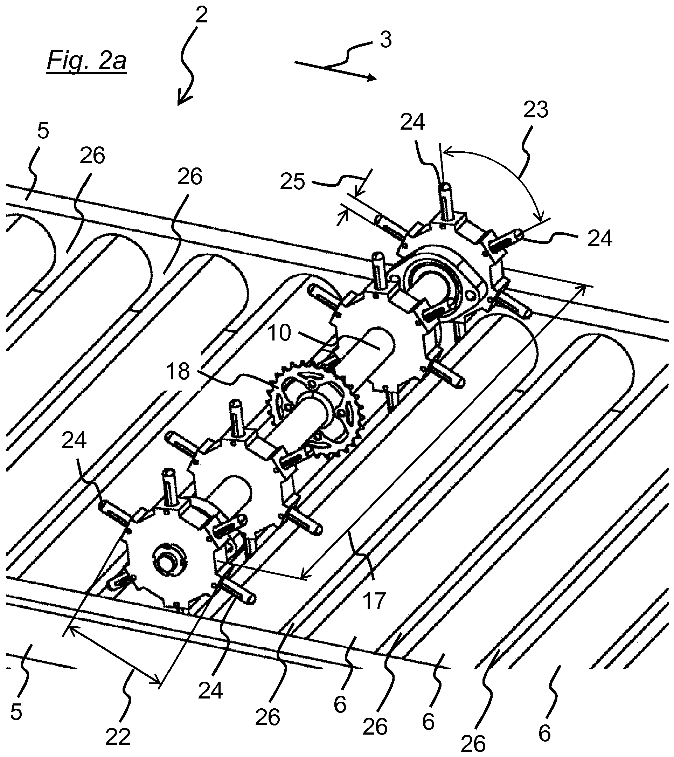

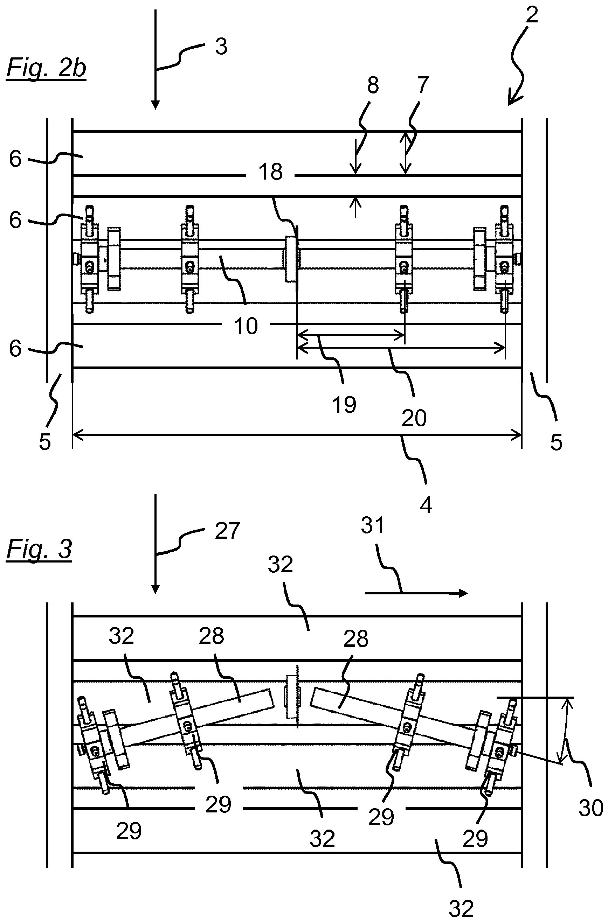

Die in den Figuren 2a und 2b als Detail dargestellte Antriebsachse 10 weist eine Länge 17 von 800 *mm* auf. Auf der Antriebsachse 10 sind in der Mitte ein Zahnrad 18 und zu beiden Seiten im Abstand 19 von jeweils 190 *mm* sowie im Abstand 20 von 370 *mm* von dem Zahnrad 18 jeweils ein Rad 21 angebracht. Das Zahnrad 18 und damit mittelbar die Antriebsachse 10 und die Räder 21 sind mittels einer nicht dargestellten Kette mit dem Kurbeltrieb 16 verbunden.

Jedes Rad 21 weist einen Durchmesser 22 von 124 *mm* und sechs im Winkel 23 von jeweils 60 *Grad* zueinander angeordnete Stützelemente 24 auf. Die Stützelemente 24 weisen einen Durchmesser 25 von 12 *mm* auf und stehen um 41 *mm* aus dem Rad 21 radial gefedert nach Außen vor.

Zur Inbetriebnahme des Transportmittels 1 wird dieses in einer Montageeinheit mit einer nicht dargestellten Basisstation mittels eines Flurfördermittels auf die Rollenbahn 2 gesetzt. Die Basisstation wird durch Verschwenken gekröpfter Dorne form- und kraftschlüssig zwischen den Tragrollen 6 fixiert und so gegen Verschieben in der Transportrichtung 3 gesichert, die Stützelemente 24 greifen in einen Zwischenraum 26 zwischen den Tragrollen 6 ein.

Erst nachdem die Bedienperson das Transportmittel 1 in der Basisstation betreten hat, lässt sich diese durch Betätigen des Kurbeltriebs 16 aus der Basisstation auf die Rollenbahn 2 und zum Einsatzort bewegen.

Figur 3 zeigt ein Detail eines zweiten, nicht weiter dargestellten erfindungsgemäßen Transportmittels: Das zweite Transportmittel weist zwei zu der Transportrichtung 27 spiegelsymmetrische Antriebsachsen 28 mit je zwei Rädern 29 auf, die jeweils um einen Anstellwinkel 30 von 15 *Grad* zu einer Längsrichtung 31 der Tragrollen 32 angestellt sind. Darüber hinaus entspricht das zweite dem ersten erfindungsgemäßen Transportmittel 1.

In den Figuren sind
- 1: Transportmittel
- 2: Rollenbahn
- 3: Transportrichtung
- 4: Abstand
- 5: Stahlprofil
- 6: Tragrolle
- 7: Durchmesser
- 8: Abstand
- 9: Kufe
- 10: Antriebsachse
- 11: Antrieb
- 12: Lastaufnahmeeinrichtung
- 13: Lauffläche
- 14: Plattform
- 15: Regal
- 16: Kurbeltrieb
- 17: Länge
- 18: Zahnrad
- 19: Abstand
- 20: Abstand
- 21: Rad
- 22: Durchmesser
- 23: Winkel
- 24: Stützelement
- 25: Durchmesser
- 26: Zwischenraum
- 27: Transportrichtung
- 28: Antriebsachse
- 29: Rad
- 30: Anstellwinkel
- 31: Längsrichtung
- 32: Tragrolle

## Patentansprüche

1. Transportmittel (1) zum Transportieren einer Last auf einer Rollenbahn (2) aus einer Mehrzahl von quer zu einer Transportrichtung (3, 27) horizontal angeordneten Tragrollen (6, 32), mit einer Lastaufnahmeeinrichtung (12) und einem Antrieb (11) sowie mit mindestens einem mittels des Antriebs (11) um eine zu der Rollenbahn (2) parallele Antriebsachse (10, 28) antreibbaren Rad (21, 29), ***gekennzeichnet durch*** Stützelemente (24), die radial zu der Antriebsachse (10, 28) aus dem mindestens einen Rad (21, 29) hervorstehen, in Zwischenräume (26) zwischen den Tragrollen (6, 32) eingreifen und das Transportmittel (1) in der Transportrichtung (3, 27) an den Tragrollen (6, 32) abstützen.

2. Transportmittel (1) nach dem vorgenannten Anspruch, ***dadurch gekennzeichnet, dass*** der Antrieb (11) einen Kurbeltrieb (16) aufweist, der mittels einer Kette mit dem mindestens einen Rad (21, 29) verbunden ist.

3. Transportmittel nach einem der vorgenannten Ansprüche, ***dadurch gekennzeichnet, dass*** die Antriebsachse (28) um einen Anstellwinkel (30) von 10 bis 20 *Grad* gegen eine Längsrichtung (31) der Tragrollen (32) angestellt ist.

4. Transportmittel nach dem vorgenannten Anspruch, ***gekennzeichnet durch*** zwei zu der Transportrichtung (27) spiegelsymmetrische Antriebsachsen (28) mit jeweils mindestens einem der Räder (29).

5. Transportmittel (1) nach einem der vorgenannten Ansprüche, ***dadurch gekennzeichnet, dass*** die Lastaufnahmeeinrichtung (12) eine Plattform (14) zur Aufnahme mindestens einer Person aufweist.

6. Rollenförderer mit einem Transportmittel (1) nach einem der vorgenannten Ansprüche, ***gekennzeichnet durch*** eine Basisstation für das Transportmittel (1) auf der Rollenbahn (2), die auf der Rollenbahn (2) gegen Verschieben in der Transportrichtung (3, 27) gesichert ist.

7. Verfahren zum Transportieren einer Last auf einer Rollenbahn (2) aus einer Mehrzahl von quer zu einer Transportrichtung (3, 27) horizontal angeordneten Tragrollen (6, 32) mittels eines Transportmittels (1), das eine Lastaufnahmeeinrichtung (12) und einen Antrieb (11) aufweist, sowie mindestens ein mittels des Antriebs (11) um eine zu der Rollenbahn (2) parallele Antriebsachse (10, 28) antreibbares Rad (21, 29), ***dadurch gekennzeichnet, dass*** Stützelemente (24), die zu der Antriebsachse (10, 28) radial aus dem mindestens einen Rad (21, 29) hervorstehen, in Zwischenräume (26) zwischen den Tragrollen (6, 32) eingreifen und das Transportmittel (1) in der Transportrichtung (3, 27) an den Tragrollen (6, 32) abstützen.

8. Verfahren nach dem vorgenannten Anspruch, ***dadurch gekennzeichnet, dass*** die Last eine Person ist, die den Antrieb (11) mit Muskelkraft betätigt.

9. Verfahren nach einem der Ansprüche 7 oder 8, ***dadurch gekennzeichnet, dass*** das Transportmittel (1) mittels eines Flurförderzeugs auf die Rollenbahn (2) gesetzt wird.

10. Verfahren nach dem vorgenannten Anspruch, ***dadurch gekennzeichnet, dass*** das Transportmittel (1) mit einer Basisstation auf die Rollenbahn (2) gesetzt wird.

## Claims

1. A transport means (1) for transporting a load on a roller track (2) composed of a plurality of carrier rollers (6, 32) arranged horizontally and transversely to a transport direction (3, 27), comprising a load-bearing device (12) and a drive (11), as well as at least one wheel (21, 29) that can be driven about a drive axle (10, 28) parallel to the roller track (2) by means of the drive (11), **characterized by** support elements (24), which protrude radially to the drive axle (10, 28) from the at least one wheel (21, 29), engage in interstices (26) between the carrier rollers (6, 32), and support the transport means (1) in the transport direction (3, 27) on the carrier rollers (6, 32).

2. The transport means (1) according to the aforementioned claim, **characterized in that** the drive (11) has a crank drive (16), which is connected to the at least one wheel (21, 29) by means of a chain.

3. The transport means according to any one of the aforementioned claims, **characterized in that** the drive axle (28) is inclined at a setting angle (30) of 10 to 20 degrees with respect to a longitudinal direction (31) of the carrier rollers (32).

4. The transport means according to the aforementioned claim, **characterized by** two drive axles (28) mirror-symmetrical to the transport direction (27), each having at least one of the wheels (29).

5. The transport means (1) according to any one of the aforementioned claims, **characterized in that** the load-bearing device (12) has a platform (14) for bearing at least one person.

6. A roller conveyor comprising a transport means (1) according to any one of the aforementioned claims, **characterized by** a base station for the transport means (1) on the roller track (2), which is secured on the roller track (2) against displacement in the transport direction (3, 27).

7. A method for transporting a load on a roller track (2), which is composed of a plurality of carrier rollers (6, 32) arranged horizontally and transversely to a transport direction (3, 27), by means of a transport means (1), which has a load-bearing device (12) and a drive (11) as well as at least one wheel (21, 29) that can be driven about a drive axle (10, 28) parallel to the roller track (2) by means of the drive (11), **characterized in that** support elements (24), which protrude radially to the drive axle (10, 28) from the at least one wheel (21, 29), engage in interstices (26) between the carrier rollers (6, 32) and support the transport means (1) in the transport direction (3, 27) on the carrier rollers (6, 32).

8. The method according to the aforementioned claim, **characterized in that** the load is a person who actuates the drive (11) by muscle power.

9. The method according to any one of Claims 7 or 8, **characterized in that** the transport means (1) is set on the roller track (2) by means of an industrial truck.

10. The method according to the aforementioned claim, **characterized in that** the transport means (1) with a base station is set on the roller track (2).

## Revendications

1. Moyen de transport (1) pour le transport d'une charge sur un convoyeur à rouleaux (2) composé d'une pluralité de rouleaux de support (6, 32) disposés horizontalement, transversalement à un dispositif de transport (3, 27), avec un dispositif de réception de charge (12) et un système d'entraînement (11) ainsi qu'avec au moins une roue (21, 29) pouvant être entraînée au moyen du système d'entraînement (11) autour d'un axe d'entraînement (10, 28) parallèle au convoyeur à rouleaux (2), **caractérisé par** des éléments de soutien (24), qui font saillie radialement à l'axe d'entraînement (10, 28) d'au moins une roue (21, 29), viennent en prise dans les espaces intermédiaires (26) entre les rouleaux de support (6, 32) et soutiennent le moyen de transport (1) dans le sens du transport (3, 27) sur les rouleaux de support (6, 32).

2. Moyen de transport (1) selon la revendication précédente, **caractérisé en ce que** le système d'entraînement (11) comporte une transmission à manivelle (16), qui est reliée au moyen d'une chaîne à au moins une roue (21, 29).

3. Moyen de transport selon l'une quelconque des revendications précédentes, **caractérisé en ce que** l'axe d'entraînement (28) est mis en prise avec un angle d'incidence (30) de 10 à 20 degrés vers une direction longitudinale (31) des rouleaux de support (32) .

4. Moyen de transport selon les revendications précédentes, **caractérisé par** deux axes d'entraînement (28) à symétrie spéculaire par rapport au sens de transport (27) avec respectivement au moins une des roues (29).

5. Moyen de transport (1) selon l'une quelconque des revendications précédentes, **caractérisé en ce que** le dispositif de réception de charge (12) comporte une plateforme (14) pour recevoir au moins une personne.

6. Convoyeur à rouleaux avec un moyen de transport (1) selon l'une quelconque des revendications précédentes, **caractérisé par** un poste de base pour le moyen de transport (1) sur le convoyeur à rouleaux (2), qui est fixé sur le convoyeur à rouleaux (2) pour empêcher tout déplacement dans le sens du transport (3, 27).

7. Procédé de transport d'une charge sur un convoyeur à rouleaux (2) composé d'une pluralité de rouleaux de support (6, 32) disposés horizontalement transversalement à un dispositif de transport (3, 27) au moyen d'un moyen de transport (1), qui comporte un dispositif de réception de charge (12) et un système d'entraînement (11), ainsi qu'au moins une roue (21, 29) pouvant être entraînée au moyen du système d'entraînement (11) autour d'un axe d'entraînement (10, 28) parallèle au convoyeur à rouleaux (2), **caractérisé en ce que** des éléments de soutien (24), qui font saillie radialement par rapport à l'axe d'entraînement (10, 28) d'au moins une roue (21, 29), viennent en prise dans les espaces intermédiaires (26) entre les rouleaux de support (6, 32) et soutiennent le moyen de transport (1) dans le sens du transport (3, 27) sur les rouleaux de support (6, 32).

8. Procédé selon la revendication précédente, **caractérisé en ce que** la charge est une personne qui actionne le système d'entraînement (11) au moyen de la force musculaire.

9. Procédé selon l'une quelconque des revendications 7 ou 8, **caractérisé en ce que** le moyen de transport (1) est posé sur le convoyeur à rouleaux (2) au moyen d'un chariot de manutention.

10. Procédé selon l'une quelconque des revendications précédentes, **caractérisé en ce que** le moyen de transport (1) est posé avec un poste de base sur le convoyeur à rouleaux (2).
